# EUROPEAN PATENT APPLICATION

(11) **EP 2 827 295 A1**
(43) Date of publication of application: **21.01.2015**
(21) Application number: 14171994.8
(22) Date of filing: 11.06.2014
(51) Int. Cl.: G06Q 50/04, G06Q 50/28

(54) **Method for enhancing safety in automated industrial environments**

(30) Priority: 11.06.2013 US 201361833507 P
(71) Applicant: Carego Innovative Technologies Inc., Burlington, ON L7M 4B8 (CA)
(72) Inventor: Boni, Martin, Burlington, ON L7M 4B8 (CA); Edwards, Robert, Burlington, ON L7M 4B8 (CA)
(74) Representative: UEXKÜLL & STOLBERG

(57) **Abstract**

The invention relates to a method comprising the steps of using, in an industrial undertaking in a premises wherein a plurality of processes are to be carried out, a conventional methodology for automating one of the processes to create an automated process; in respect of each process of the plurality, assigning space in the premises that is suitable for carrying out said each process, the assignment of space being such that space assigned to the automated process is at least partly assigned to other processes; providing a perimeter around the space assigned to the automated process that has closures that are susceptible to selective securement; providing one or more of activation control measures associated at least with securement of the closures which must be satisfied prior to actuation of the automated process; and incursion control measures which, in the event that the space assigned to the automated process is subject to an incursion by another process, arrests the automated process until such time as the assigned space has been vacated; and causing the undertaking to carry out the processes as required to meet the performance demands of the undertaking.

## Description

### FIELD OF THE INVENTION

The invention relates to the field of automation.

### BACKGROUND

It is well known to introduce automation into industrial environments. However, heretofore, the incorporation of automation into certain industrial environments, particularly, those which
- have need for periodic human presence;
- pose great dangers to humans; and
- are located in jurisdictions which require humans to be protected from automation malfunction
has proven impractical, as the safety measures necessary to provide requisite safeguards for the human element have proven prohibitively costly or impossible to produce.

One such environment which has heretofore proven incompatible to automation is steel coil storage in the European Community, by virtue, *inter alia,* of the standards associated with the requisite Conformité Européenne, or CE, marking.

### SUMMARY OF THE INVENTION

A method forms one aspect of the invention.

The method comprises the use, in an industrial undertaking in a premises wherein a plurality of processes are to be carried out, of a conventional methodology for automating one of the processes to create an automated process.

The method further comprises the steps of:
- in respect of each process of the plurality, assigning space in the premises that is suitable for carrying out said each process, the assignment of space being such that space assigned to the automated process is at least partly assigned to other processes;
- providing a perimeter around the space assigned to the automated process that has closures that are susceptible to selective securement;
- providing one or more of: activation control measures associated at least with securement of the closures which must be satisfied prior to actuation of the automated process; and incursion control measures which, in the event that the space assigned to the automated process is subject to an incursion by another process, arrests the automated process until such time as the assigned space has been vacated; and
- causing the undertaking to carry out the processes as required to meet the performance demands of the undertaking.

According to another aspect, the method can further comprise the steps of: defining a plurality of operating modes for the undertaking; assigning each of the processes to the modes so as to define an automated mode to which the automated process is assigned and one or more manual modes to which the automated process is not assigned; and in respect of each mode and in respect of each process assigned thereto, assigning space in the premises that is suitable for carrying out said each respective process.

According to another aspect: the space assigned to the automated process in respect of the automated mode can be at least partly assigned to other processes assigned to the automated mode; and the incursion control measures can be provided.

According to another aspect: the space assigned to the automated process in respect of the automated mode can be at least partly assigned to one or more processes assigned to non-automated modes; and the activation control measures can be provided and must be satisfied prior to assumption by the undertaking of the automated mode.

According to another aspect: the undertaking can be a coil storage facility; the premises can have a coil storage warehouse and a shipping/receiving area; and an overhead crane adapted for transporting coils can be provided for the warehouse.

According to another aspect, the modes can comprise automatic and manual and the processes assigned thereto can comprise
- for the automatic mode: automated coil put-away to the warehouse; automated coil picking from the warehouse; manual coil receiving to the shipping/receiving area; and manual coil shipping from the shipping/receiving area
- for the manual mode: manual coil put away to the warehouse; manual coil picking from the warehouse; manual coil receiving to the shipping/receiving area; and manual coil shipping from the shipping/receiving area.

According to another aspect: the shipping/receiving area can includes a transition area which is traversed by the overhead crane for the warehouse; the space assigned to manual coil put-away, automated coil put-away, manual coil pickup and automated coil pick-up can be defined by the transition area and the warehouse; and the space assigned to manual coil receiving and manual coil shipping can be defined by the shipping/receiving area.

According to another aspect: the transition area can define at least one transfer zone into which a coil is placed when: transitioning between coil receiving and coil put-away; and transitioning between coil pick-up and coil shipping.

According to another aspect: the system can provide, for each transfer zone, a visual signal perceptible in the shipping/receiving area to denote when the transfer zone has been selected to receive a coil. According to another aspect: each transfer zone can have an associated sensor adapted to determine when a coil has been positioned therein; the incursion control measures can provide, when the sensor associated with a transfer zone that has been selected to receive a coil determines that a coil has been improperly placed in the associated transfer zone, for the arrest of the automated process until such time as the zone has been vacated.

According to another aspect: the transfer zone can be a fixed bunk which is accessible by both the overhead crane for the warehouse and an overhead crane provided for the shipping/receiving area.

According to another aspect redundant collision avoidance systems can be provided, so as to ensure that the crane for the warehouse and the crane for the shipping/receiving area do not collide.

According to another aspect, the incursion control measures can provide, when: the collision avoidance systems sense that the crane for the shipping/receiving area is within a safety perimeter surrounding the warehouse crane; and the crane provided for the warehouse is carrying out an automated process, for movement of the crane provided for the warehouse to be arrested until such time as the shipping/receiving crane vacates the safety perimeter.

According to another aspect
- the space assigned to the automated process can be accessible only by way of closures in respect of which a physical key must be used for locking and unlocking;
- the automation system can be switchable between the manual and automatic modes only by way of the key; and
- the activation control measures can be provided and comprise: sensors associated with the closures to the warehouse that are adapted to sense if the closures are secured; logic associated with the automation system that prohibits the assumption by the undertaking of the automatic mode unless the closures are secured; and functionality associated with the switch that necessarily results in deactivation of the automated mode when the key is apart from the switch.

According to another aspect, repositionable bunks can be used for receipt of coils in the warehouse.

According to another aspect, the modes can further comprise a rebunking mode to which is assigned the processes: bunk repositioning; manual coil receiving to the shipping/receiving area; and manual coil shipping from the shipping/receiving area.

According to another aspect, the space assigned to bunk repositioning can be the lower portion of the warehouse.

According to another aspect:
- the automation system can be switchable between the manual, automatic and rebunking modes only by way of the key; and
- the activation control measures can comprise: a requirement that, to access the rebunking mode, the grab of the overhead crane must be free of a load and in the full-up position; and control language which locks out the hoist in the rebunking mode.

Other advantages, features and characteristics of the present invention, as well as methods of operation and functions of the related elements of the structure, and the combination of parts and economies of manufacture, will become more apparent upon consideration of the following detailed description and the appended claims with reference to the accompanying drawings, the latter being briefly described hereinbelow.

### BRIEF DESCRIPTION OF THE DRAWINGS

- FIG. 1: is a schematic plan view of a coil storage facility which forms an exemplary embodiment of the invention;
- FIG. 2: is a view showing a transfer cradle that forms part of the facility of FIG. 1 in use with a coil;
- FIG. 3: is a schematic plan view of a coil storage facility according to another embodiment of the invention; and
- FIG. 4: is a lighting key.

### DETAILED DESCRIPTION OF THE EXEMPLARY EMBODIMENT

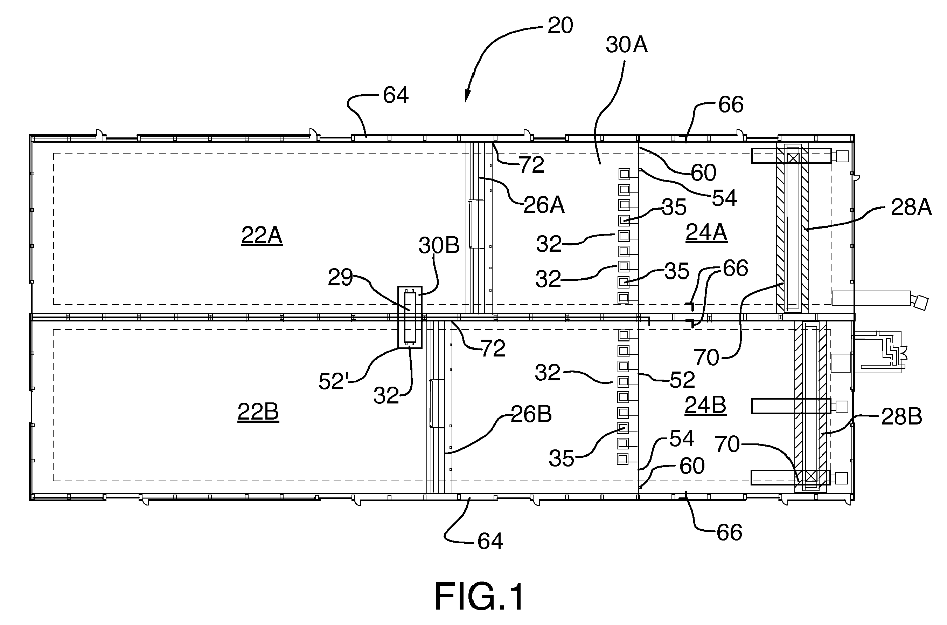

As an initial matter, the exemplary embodiment will be understood to be a solution for an industrial undertaking in the form of a storage facility for steel coils. The undertaking comprises a shipping/receiving area and coil storage warehouse. The facility is designed as a hybrid manual and automated storage facility, in that storage bays will normally be unmanned and automated but the loading/unloading, or shipping/receiving, area will be manually operated. Specifically, facility 20 is of the type indicated in FIG. 1 to have:
- a coil storage area or warehouse defined by two bays 22A, 22B
- a shipping/receiving area defined by two docks 24A, 24B
- an overhead crane 26A, 26B provided for each bay and adapted for transporting coils
- an overhead crane 28A, 28B provided for the shipping/receiving area and adapted for transporting coils

In the exemplary embodiment, the shipping/receiving area is approximately 94 feet wide by 103 feet long. Each bay 22A, 22B is approximately 94 feet wide x 446 feet long, and the approximate useable space in each bay is 324 feet x 94 feet. The person of skill in the art will appreciate that other dimensions suitable for accommodating the setup and methods herein described are within the scope of this disclosure.

Each coil 55 is set down on a circumferential edge, and is typically arranged so that eye 56 of the coil faces the shipping area. In the exemplary embodiment, it is expected that there will be room for approximately 3100 coils per bay 22A, 22B, although the capacity for storage can vary and depends at least on the dimensions of the facility and of the coils. In the warehouse, coils 55 are set on bunks 35', which are typically made of wood and are positioned and arranged to optimize the storage capacity of the bays 22A, 22B.

Positioning of the bunks 35' in storage bays 22A, 22B is manual. Due to the automation within the facility, the correct and accurate positioning of the bunks is important to the successful operation of the facility. To assist in the correct positioning of the bunks, bunks can be positioned to align with a virtual map of bunk locations that is stored and referenced by a control system which controls the automated processes within the facility. The system will provide a centering mark provided by a bunking laser, typically mounted to an overhead crane, that will mark the center of each bunk location in accordance with the map, allowing the operator to properly center the bunk on the centering mark.

Inventory rules in the exemplary embodiment dictate that unlike products cannot be mixed; exemplary classifications are: canned, de-canned, dry, and oiled. The steel coils 55 will accordingly be grouped when stored in bays 22A, 22B. Further, each bay 22A, 22B will be divided into rows spanning the width of the bay. Due to the variety of coil sizes that could be stored in the storage bays, the number of rows, and the number of bunks per row, will be configurable within the control system. Also due to the various coil sizes that could be stored in the storage bays, each bay 22A, 22B is typically divided into "zones" to keep coils of similar size together. The grouping of like-sized coils in this manner facilitates storage of coils in stacks (i.e. on top of each other).

When a new configuration of rows is implemented, the pointing laser, typically a red light laser, will be used to indicate the center position of each bunk 35', to ensure that the bunks are accurately manually positioned in accordance with the updated map.

Each coil is associated with a barcode having information that uniquely identifies the respective coil. When coil positions are changed in accordance with a new layout configuration, the control system can "remember", or maintain a history of, the previous coil locations as each such location is stored in a Storage Bay Management System (SBMS) in association with the respective barcode.

The main inventory control system is the Inventory Management System (IMS). In the exemplary embodiment, the databases used by the IMS are Oracle™ and Microsoft™ SQL™ database, although other database programs capable of the functions herein described are within the scope of the present disclosure. Further, in the exemplary embodiment, communication between the IMS and the SBMS is via the Rockwell Software™ RSSql™ program, although other programs capable of database connectivity and communication may be used.

The IMS system contains a database of steel coil information which is updated as required as the coil travels from supplier to buyer. As the coil is moved from location to location, the current location of the coil in maintained within the database. The IMS system is updated from the SBMS each time the coil is relocated.

In the exemplary embodiment, the SBMS is accessed via TCP/IP over Ethernet™. The SBMS requires the following data from the IMS:
- Coil Identifier
- Coil Gauge (thickness)
- Coil Width
- Coil Packaging
- Coil Outside Diameter
- Coil Inside Diameter
- Oiled or Dry
- Material Type
- Customer Identifier

The actual storage location co-ordinates are stored for each coil within the SBMS, both as Bay, Row, Position, and Level, and as Cartesian x, y, z co-ordinates.

Automation solutions for facilities of this general type are known, and often employ overhead automated cranes and crane control systems. The cranes are typically capable of movement overhead to position the crane grab at various x, y, z-coordinates of the facility in order to grasp, lift, move, and lower steel coils at an x, y, z-coordinate of the facility. One such solution ["the known technology"] is described in International Application PCT/CA2013/000329, published May 8, 2014.

In the exemplary embodiment, a transfer car 29 is provided, which allows for movement of coils between bays 22A, 22B, and the known technology is used to automate the following processes:
- coil put-away to the warehouse
   *coils in the crane grab are transported to a selected location in the warehouse and deposited*
   *thereat*
- coil picking from the warehouse
   *the crane grab travels to a selected location in the warehouse and grasps a coil thereat*
- rebunking
   *the crane travels to a selected location in the warehouse and a laser fitted to the crane spots the location of a bunk, which is placed manually*

[Operation of the transfer car should be understood to be part of the coil-picking and coil-storage processes and controllable by the automation system.] More than one transfer car may be used.

Other processes carried out in the facility, to wit, shipping and receiving, are carried out with manually operated overhead cranes.

Whereas in conventional implementations of the known technology, the interface between, for example, shipping/receiving and coil storage functionality is fluid, with workers being expected to use common sense to avoid harm, in the exemplary embodiment, harm is avoided by adoption of the inventive method.

In this regard, as part of the application of the inventive method, in the exemplary embodiment:
- a first transition area 30A is defined at the interface between the warehouse and the shipping/receiving area and a second transition area 30B is defined to encompass the transfer car 29;
- the automated processes, and well as various non-automated processes, are assigned to one of three distinct operating modes, namely, automatic, manual and rebunking;
- to each process in respect of each mode, space is assigned, the space being suitable for carrying out said each process;
- a perimeter is provided around the space assigned to the automated process, the perimeter having closures that are susceptible to selective securement;
- incursion control measures and activation control measures are provided; and
- the undertaking is caused to carry out the processes as required to meet the performance demands of the undertaking.

The SBMS controls the movement of the coils within the coil storage area, and communicates with: the IMS over Ethernet by, for example, the Rockwell RSSql software; the transfer cradles or bunks 35 (used during the coil put away process described hereinbelow) and car via hardwired input/output (I/O); and the overhead crane control systems via wireless bridge. It will be appreciated that other communication mediums and/or methods suitable for the solution herein described are within the scope of the present disclosure.

While coils are within the coil storage facility, the SBMS maintains its own database of coil locations, such that if a communication failure occurs between the IMS and the SBMS, coils can still be located. The information is buffered within the SBMS so that, in the event of a communication failure between the IMS and the SBMS, the IMS can be updated with the buffered information when communications are restored.

In the exemplary embodiment, the SBMS comprises a Programmable Logic Controller or PLC (the Rockwell™ Allen-Bradley™ ControlLogix™) and a Human Machine Interface or HMI (Rockwell Allen-Bradley Panelview™). Other suitable PLC and/or HMI solutions are within the scope of the present disclosure.

The SBMS system performs the following tasks:
- Communicates with the IMS database (e.g., Oracle or SQL)
- Maps the location of each coil within the coil storage bays
- Holds a queue of transfer cradles, transfer car, and crane directions
- Holds a queue of commands to process
- Performs high level resource management
- Performs queue management and task priority management

Each overhead crane has drive controls onboard, with a PLC, wireless transmission unit and a manually operated radio receiver. The SBMS is also fitted with wireless transmission capability, in order to send and receive signals from the cranes. The SBMS provides the automated cranes with a command to currently execute, which is then carried out by the PLC and sensors on the crane.

Each crane has long-travel and cross-travel drives which, in the exemplary embodiment, are variable frequency drives. A crane hoist drive, for lifting or hoisting the steel coils via the crane grab, is a flux vector drive. Other types of drives capable of performing the functions herein described can be used, and are within the scope of the present disclosure. Further, in the exemplary embodiment, the drives communicate via Ethernet Industrial Protocol (Ethernet/IP™), although they are capable of communicating via a number of communications protocols. Further, in the exemplary embodiment, the wireless transmission units are supplied by Cisco Systems, Inc., although other types of wireless transmission units can be used.

The crane manufacturer supplies the manually operated radio control units. The interface between the radio units and the onboard drives are hardwired. These controls are used in the event that the automated cranes need to be operated manually.

Each crane is fitted with laser type distance measuring sensors, to determine the crane distance along the storage bay and the hoist trolley distance across the storage bays. Each hoist is fitted with an encoder to determine the height to which the hoist has traveled. Each time a coil is picked up, the hoist is raised to its uppermost position. A limit switch provides feedback to the PLC that the hoist is in the uppermost position, at which time the hoist encoder signal is reset. The grab mechanism is directly connected to the hoist bail and cannot rotate. The hoist bail is fitted with a load cell that can give broad indications of the load being moved. The bunking laser is mounted on the underside of the hoist trolley and is hardwired to the crane PLC. The grab mechanism extends and retracts, by means of a fixed-speed motor and screw, to pick up the coil. The distance that the grab mechanism moves in and out is controlled from the onboard PLC. The grab mechanism is fitted with an encoder for position control. The grab mechanism encoder is re-calibrated after a preset number of operations, normally when the crane is in long-travel motion with no coil loaded, using end-of-travel limit switches as the trigger.

Each coil grab mechanism is fitted with photo sensors to determine positioning of the grab arms when picking up a coil. These sensors provide feedback of the correct line-up of the arms with the eye of the coil. The grab arms are also fitted with paddle type switches that will engage when pressed firmly against the coil walls. This is a means for the PLC to know when the grab has a positive close on the coil. Another sensor, in the foot of the grab, is a ball switch that engages when the coil is picked up. This tells the PLC when the coil is safely sitting on the feet of the grab. These signals are hardwired to the crane PLC, via a cable reel and festoon system.

The onboard PLC receives location co-ordinates from the SBMS, which undertakes the following actions:
- Lower hoist and locate coil centre opening
- Close grab mechanism
- Raise hoist to upper position (using guides to maintain coil in position)
- Accelerate from position to laydown location x-co-ordinate
- Move at full speed to laydown location x-co-ordinate
- Decelerate to laydown location x-co-ordinate and traverse coil to y-co-ordinate
- Stop at x-y co-ordinate
- Lower coil to z-co-ordinate
- Release grab mechanism
- Send signal to SBMS that coil has been set down

The main processes carried out in the facility are hereinafter described.

### Vessel Receiving Process

The IMS system, used in conjunction with with radio-frequency (RF) scanners, will allow an operator to receive and track material coming off a vessel. The operator will indicate which master order or vessel and the hatch number they are receiving from. The operator will then scan or enter the material identifications as they come off the vessel. The scanned list is compared with a list of material previously imported into the system to ensure accurate material control. If a piece is not found in the list, then the system will notify the operator and that material can be quarantined until it is identified. In either case, the material is received to the dock and the status will either be "ready for use" or "held in quarantine". The receipt of the material through the RF scanner automatically updates the IMS system so that the incoming material contains the date and time of the receipt to the dock. The material handlers will move the material into the facility and a location change will be recorded on the RF scanner to indicate that it is now in the facility ready to be put into automation.

### Shipping by Truck/Rail/Container/Vessel Process

The IMS system allows for the shipment of material by any mode of transportation. Once a customer has requested material to be shipped, a shipping order matching the requirements is created in the system. Once the order is in the system, the material to be pulled out of automation is identified on a pick sheet. The operator will then use the "Coil Pick" process to pull out the required coil(s) for shipping. When the mode of transportation is ready for loading, the operator will use the RF scanners to indicate which shipment is being loaded and scan each piece as it is loaded on or into the appropriate outbound transportation mode. This process allows the system to monitor the loading process in order to verify that the operator has fully loaded all of the correct material for the shipment. When the shipment is processed, the inventory items are updated with the correct time and date for the outbound shipment.

### Truck/Rail Receiving Process

The system for receiving material from truck or rail is similar to that of vessel unloading except that the truck or rail car is already in the building and can be transferred directly to the automation. See the section below entitled "Automated Coil Put Away".

### Automated Coil Put Away

When sending coils to the storage area, i.e. bays 22A, 22B, the operator initiates the operation via the RF scanner. The operator will manually place the coil on a transfer cradle 35, described in detail in following passages, that is free. Whether a transfer cradle is free is determined by the operating lights 34 on the front thereof. If the cradle has a flashing red light, then the cradle has already been selected for an automated operation and cannot be used. If the operator ignores this visual cue and still places the coil on the cradle, sensors built into the cradle will identify that the bunk 35' thereof is occupied and cause the automation to fault out until the coil is removed.

Once the coil has been placed on a free transfer cradle, the operator will scan the barcode on the coil using the RF scanner. The process will either return an error message indicating that the coil will not fit in the storage area, or return the number of available positions in the storage area. If there is room in the storage area, the operator will use the RF scanner to scan or enter the cradle number. This number is validated against the list of valid cradles and then a message is sent to the SBMS system to inform it of a coil to put away.

The SBMS system will validate that a coil is present on the specified transfer cradle using the sensors on the transfer cradle. If validated, then the coil data is retrieved from the IMS database for that barcode. If the coil data cannot be found in IMS then the operator is presented with an error message and the coil cannot be put away in automation. The SBMS receives the physical size limits of the coil either from the internal coil database or from the IMS and determines the storage location for the coil within the storage area bays 22A, 22B. The SBMS then sends a command to the automated crane to pick up the coil from the target transfer cradle, and to place it at the identified location for the coil within the storage area.

Until the coil is picked up, the SBMS system will continue to monitor the cradle sensors and confirm the presence of the coil. If for any reason the coil is moved before the automated crane engages the coil on the transfer cradle, the system will generate a fault condition.

Upon completion of the task, the SBMS sends an information packet to the IMS in order to update the IMS with the new coil location.

### Automated Coil Picking

When sending coils to the shipping/receiving bay, the process is initiated by the RF scanner. If the coil cannot be found in the storage map then an error message is sent to the operator. Upon successful location of the coil in the storage map, the system sends a message to the SBMS requesting the required coil. The SBMS locates the coil in the storage map and reserves a transfer cradle by triggering the red lights 34 to flash. The SBMS then sends a command to the automated crane to retrieve the requested coil and return it to the specified transfer cradle.

If the coil to be retrieved is on a lower level, with a coil above it, the SBMS determines whether the upper coil is also required to be shipped. If it is, the SBMS informs the crane to ship the upper coil first. If it is not, the SBMS determines a new location for the upper coil, and informs the overhead crane control system of the new location. The crane then relocates the upper coil. When the completion signal is received by the SBMS, the SBMS informs the IMS. The coil at the lower elevation can then be moved as originally requested.

Upon completion of the task, the SBMS sends an information packet to the IMS in order to update the IMS with the new coil location.

### Automated Rebunking

When rebunking a row is required due to changes to the row structure, the operator can initiate the rebunking process via the RF scanner. The operator will enter the bay, row, and optionally the starting position, to begin bunking. The default is to start at position "1". A message is then sent to the SBMS system to send the automated crane to the selected row and position. The automated crane will come to a position that is offset from the actual row the operator is working in. It is expected that this will prevent the automated crane from being overhead of the operator at any time during the process.

Once the automated crane is in position, it will turn on the red light bunking laser and shine a small red laser dot on the floor. This is to be used as a center marker for the new location of the storage bunk for that position. The operator has the option of moving the bunk into the proper position at that time or marking the spot with, e.g. chalk, and moving the bunk at a later time. Once marking or moving of the bunk is complete, the operator can then use the RF scanner to tell the system to move to the next sequential position.

The operator repeats this process until rebunking is complete, at which time the operator quits the process.

Further concepts of the exemplary embodiment are described hereinafter.

### Transition Areas

In the exemplary embodiment, the system will use up to ten transfer cradles 35 per bay 22A, 22B. These transfer cradles 35 are the means by which material is transferred from manual control to automated control. The cradles 35 are fixed to the floor and do not move, and will be located at the very front of the automated portion of the warehouse, in first transition area 30A. There will be a safety fence or barrier 52 that separates the manual area from the automated area. In order to place a coil on the cradle 35 the operator, using the manual crane, lifts the material from the shipping/receiving area 24A, 24B, over the fence 52, and onto the appropriate cradle 35 in transition area 30A of the storage area. The operator must be careful to center the coil on the transfer cradle 35.

The cradle 35 includes a bunk 35' designed to accommodate a maximum coil diameter of 2 meters and a minimum coil diameter of 600mm. The cradle is designed to effectively handle coils up to 50tonne in weight. The faces of the cradle that touch the material or coil thereupon are coated in urethane to minimize or prevent damage to the surface of the material. It will be understood that alternate cradles are possible and within the scope of the present disclosure.

First transition area 30A defines at least one transfer zone 32 into which a coil is placed when in transit between the warehouse and the shipping and receiving area and serves the purpose of simplifying automation (providing a fixed reference point as a terminus of the automated coil-related process) and also simplifies the points of ingress/egress into the automated system. That is, rather than having an open perimeter which is penetrated at any one of a variety of locations, as would be the case if coils were transported into the warehouse by lift truck, only a few, discrete locations serve as coil egress/ingress points, which simplifies, *inter alia,* tracking and error checking. In the exemplary embodiment, the first transition area 30A is defined in the shipping/receiving area 24A, 24B, but could equally be defined in the warehouse 22A, 22B, or as a space distinct from both.

Second transition area 30B defines at least one transfer zone 32 into which a coil is placed when in transit between the bays and serves purposes similar to first transition area 30A.

### Modes and Space Assignments

The processes assigned in the exemplary embodiment to the three modes, and the respective space assignments, are indicated in the table below:

**Table 1: Space Assignments by Mode and Process**

| Mode | Process Assignments | Space Assignments |
|---|---|---|
| Automated | manual coil receiving to the shipping/receiving area | shipping/receiving area 24A, 24B |
| | manual coil shipping from the shipping/receiving area | shipping/receiving area 24A, 24B |
| | automated coil put away to the warehouse | warehouse 22A, 22B and transition area 30A |
| | automated coil picking from the warehouse | warehouse 22A, 22B and transition area 30A |
| Manual | manual coil receiving to the shipping/receiving area | shipping/receiving area 24A, 24B |
| | manual coil shipping from the shipping/receiving area | shipping/receiving area 24A, 24B |
| | manual coil put away to the warehouse | warehouse 22A, 22B + transition area 30A |
| | manual coil picking from the warehouse | warehouse 22A, 22B + transition area 30A |
| Rebunking | Rebunking | lower portion of warehouse 22A, 22B [i.e. from the floor surface to an elevation of 7 feet] |

From the above, it will be noted that space assigned to the automated process in respect of an automated mode is at least partly assigned to other processes assigned to the same automated mode, i.e. in the automated mode, manual coil shipping and receiving is assigned the shipping/receiving area, and the space to which automated coil put away and pick up is assigned includes the transition area, which will be recalled to be defined as part of the shipping/receiving area.

As well, it will be noted that space assigned to the automated process in respect of the automated mode is at least partly assigned to one or more processes assigned to non-automated modes. That is, the warehouse area is used for both manual and automated coil pick-up and put-away, and the human traversed portion of the warehouse (i.e. the volume extending from the floor surface to a level about 7 feet above the floor surface) is used for coil pick-up, coil put-away and rebunking.

### Security Perimeter

As indicated, in the exemplary embodiment, a perimeter is provided around the space assigned to the automated process that has closures [gates, doors, etc.] that are susceptible to selective securement. In the context of the exemplary coil storage facility, the perimeter is defined by:
- a locked safety access gate system 52, 60 which separates the manual area (human accessible) from the automated area, the safety access gates 60 being locked with a physical key
- locks associated with all doors providing exterior access to the automated area, the locks being key locked from the inside except for fire doors which must be open only from the inside
- safety related limit switches 54 positioned to coincide with the defined travel area of the warehouse cranes which trip emergency stops, or e-stops, if any of the cranes 26A, 26B reach the limit of travel
- safety fencing 52 guarding the transition zone so that operators carrying out bunking in the warehouse or shipping/receiving in the shipping/receiving area cannot inadvertently enter
- safety fencing 52' surrounding the transfer car 29 so that operators working on a bay 22A, 22B floor during manual mode cannot inadvertently enter the perimeter area around the transfer car

In respect of the crane limit switches 54, these will be understood to be included so as to allow the warehouse cranes 26A, 26B, which traverse the same rail structure as the shipping/receiving cranes 28A, 28B, to be used for shipping receiving functions, in the event that the shipping/receiving crane is in service or otherwise unavailable. If this functionality were not desired, for example, if the cranes were not on a common rail structure, or if it was certain that the warehouse crane would never be needed in the shipping/receiving area, physical blocks or end stops could be placed on the rail structure to create the security perimeter.

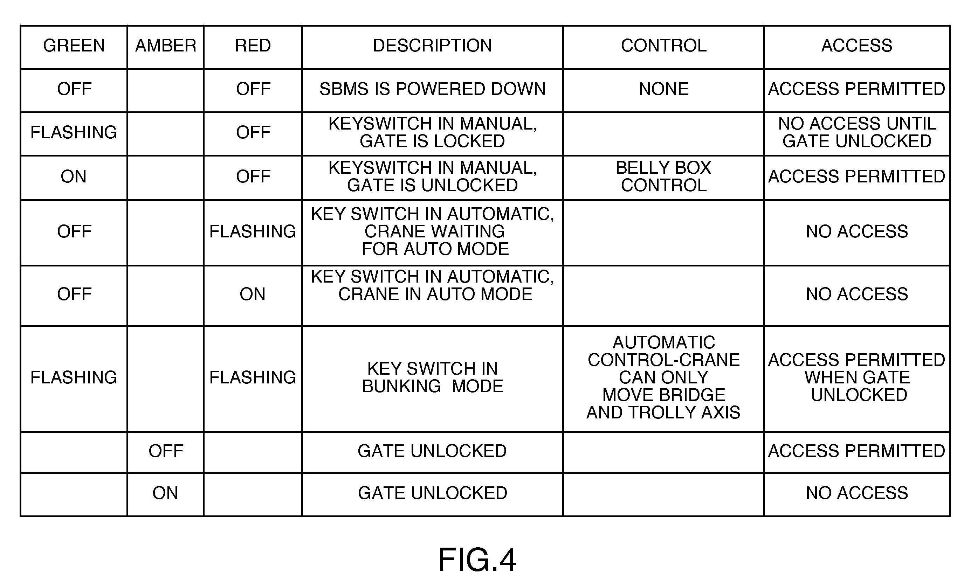

Other features associated with the safety perimeter include:
- At each of the safety access gates 60, a light beacon which is interlocked with the locking mechanisms of the gate and the modes of operations (automated, manual, re-bunking). A key sign illustrating the lighting notation is posted at each safety access gate, as shown in FIG. 4.
- The perimeter walls 64 alongside the facility are concrete; in the event that coils slide in an accident, they would slide laterally (steel coils do not roll) and be contained by the concrete walls.
- If coils were to topple from a stacked position in the first row, i.e. the row immediately to the left of the safety barrier 52 in FIG. 1, towards humans in the manual shipping/receiving area, the humans would be protected by virtue of the buffer space provided by the transfer zones 32 and the safety fencing 52.

### Activation Control Measures

The Activation Control measures are provided to avoid conflicts associated with the assignment of space to the automated process in the automated mode that is at least partly assigned to one or more processes assigned to non-automated modes, and in the exemplary embodiments are defined by:
- a switch actuable by the key for transitioning the undertaking between modes
- sensors associated with the closures to the automation area that are adapted to sense if the closures are secured
- logic associated with the automation system that prohibits the assumption by the undertaking of the automatic mode unless the closures are secured
- functionality associated with the switch that necessarily results in deactivation of the automated mode when the key is apart from the switch
- sensors associated with the grab of the overhead crane that are adapted to sense if the hoist is in the full-up position and if the grab is possessed of a coil
- functionality associated with the automation system that prohibits assumption of the rebunking mode unless the grab of the overhead crane is free of a load, in the full-up position, and locked-out
- functionality associated with the automation system that provides a visual and audible warning prior to start-up of automation that provides a sufficient delay to allow persons in the area to leave the area or prevent start-up using e-stops 66 [situated at least at all access points from the manual area into the automated area]
- redundant sensors which detect the presence of a coil in the transition area and which, in the event of disagreement, disable the automation system
- redundant sensors which detect the presence of a coil in the grab and which, in the event of disagreement, disable the automation system

### Incursion Control Measures

The incursion control measures are adapted to, in the event that the space assigned to the automated process is subject to an incursion by another process, arrest the automated process until such time as the assigned space has been vacated. In the exemplary embodiment, this functionality is defined by functionality associated with the transition area and functionality associated with the overhead cranes.

### Transition Area

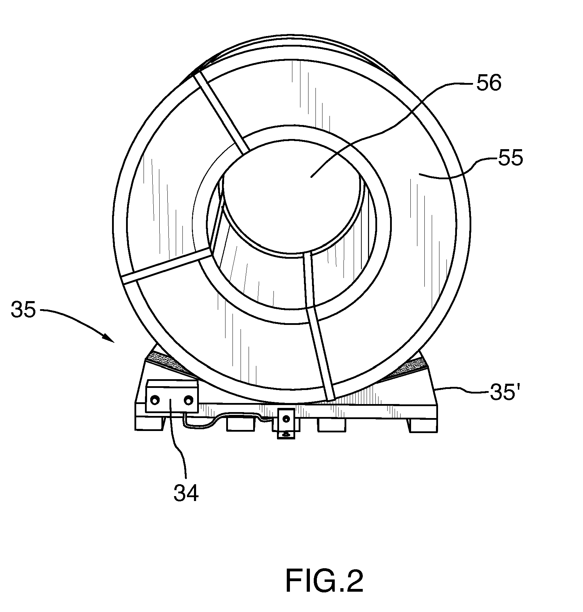

For each transfer zone 32 there is provided a visual signal, i.e. a flashing red light 34, to denote when the transfer zone has been selected to receive a coil or is otherwise unsuitable for use, e.g. under repair. In the exemplary embodiment, each transfer zone in the first transition area 30A includes a fixed transfer cradle 35, as shown in FIG. 2, which is accessible by both the overhead crane 26A, 26B for the warehouse and the overhead crane 28A, 28B provided for the shipping/receiving area.

Each transfer cradle 35 has two different sensors to detect if a coil is present thereupon: an optical sensor and a magnetic induction sensor, although other types of sensors adapted to determine when a coil has been positioned in the cradle can be used. If either of the sensors detects the presence of a coil, it will update the PLC to indicate that there is some material on the cradle. Further, the incursion control measures provide, when the sensor associated with a transfer zone that has been selected to receive a coil determines that a coil has been improperly placed in the transfer zone, for the arrest of the automated process until such time as the zone has been vacated. The transfer zone 32 in the second transition area 30B is defined by the space encompassing the transfer car 29 that automatically shuttles coils between the bays 22A, 22B when both bays are in automatic mode, and otherwise is controllable by hold-to-run controls.

The operating lights 34 on the cradle convey various messages to the operator, as indicated in the table below:

**Table 2: Transfer Cradle Lighting Key**

| **Green** | **Red** | **Description** |
|---|---|---|
| | | |
| **Off** | **Off** | Cradle Disabled |
| | | |
| **On** | **Off** | Open Cradle, No Coil |
| | | |
| **Flashing** | **Off** | Coil On Cradle is Unscanned |
| | | |
| **Flashing** | **On** | Automation in Process of Putting Away Coil, Coil still on Cradle |
| | | |
| **Flicker** | **Flicker** | 2 seconds of flicker - Sensor(s) initially detects a coil present |
| | | |
| **Off** | **On** | Automation pulling out coil and has reserved this cradle |
| | | |
| **On** | **Flashing** | Automation pulling out coil and the coil is on the cradle |
| | | |
| **On** | **On** | Not Used |
| | | |
| **Flashing** | **Flashing** | Cradle Reporting Invalid Sensor, Cradle No Longer in Use by Automation |

### Crane Functions

The warehouse solution uses the two cranes 26A, 26B and 28A, 28B on the same rail system, the former being automated and the latter being manually operated. As described, the manual crane is used for loading and moving coils to and from the transfer cradles. However, when working with two cranes on the same rails, collision avoidance is a key requirement. Each crane is fitted with its own collision avoidance system 70, 72, in order to provide for a redundant collision avoidance mechanism, so as to ensure that the cranes 26A, 28A and 26B, 28B do not collide. The system will monitor both the position of the manual crane (via laser measurement) and the automated crane. When one or both of the collision avoidance systems sense that the crane for the shipping/receiving area is within a safety perimeter surrounding the automated warehouse crane, or within the "safe" working zone of the automated crane, and the automated crane is carrying out an automated process, movement of the automated crane will be arrested or paused until such time as the shipping/receiving crane vacates the "safe" working zone or safety perimeter of the automated crane.

The safety limit switches 54 placed on the rails are expected to prevent the automated crane from travelling outside its automated work area into the manual space. In the exemplary embodiment, these limits will be interlocked so that the automated crane can be used in a manual mode outside of the automated space, in case of a breakdown in the manual crane.

### Intermittent Variant

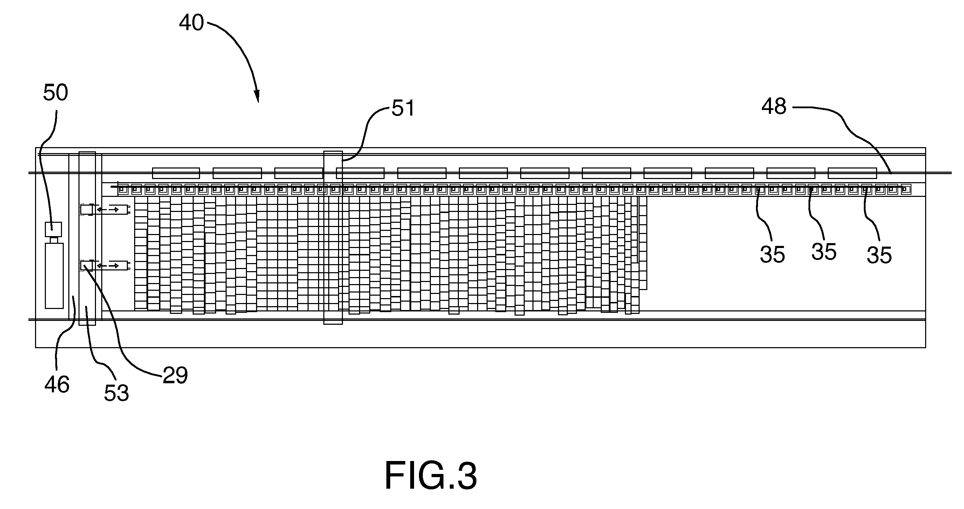

The described exemplary embodiment, which involves a limited number of transfer zones and separate cranes for shipping/receiving and picking/put-away, is suitable at least for 24 hour manned operation. An intermittent variant is shown in FIG. 3. In this variant, a twelve car train is shunted into the facility 40 on a rail spur 48 while the automation system is in the manual mode. Operators manually remove all coils from the train using an overhead crane 51 and place them upon transfer cradles 35, which are located immediately adjacent to the railcars. The empty rail cars are shunted out of the building, the humans leave, and thereafter, the coils are placed in storage by the crane 51 under automation control. This variant is well-suited for a facility that carries out receiving otherwise than 24 hours per day. For shipping, coils are transported to transfer cars 29 that shuttle the coils onto a shipping dock 46, from which coils are transported to waiting trucks 50 by another overhead crane 53.

As will be evident to persons of ordinary skill, the foregoing is of great advantage.

Without intending to be bound by theory, the decision to strictly control the operation of the automation so as to isolate the automation from human presence, by temporal and/or spatial constraints, allow the economic deployment of automation in environments that heretofore have proven prohibitively expensive.

Whereas but two embodiments are described herein, it will be evident that variations are possible.

Accordingly, the invention should be limited only by the accompanying claims, purposively construed.

## Claims

1. A method comprising the steps of:
using, in an industrial undertaking in a premises wherein a plurality of processes are to be carried out, a conventional methodology for automating one of the processes to create an automated process;
in respect of each process of the plurality, assigning space in the premises that is suitable for carrying out said each process, the assignment of space being such that space assigned to the automated process is at least partly assigned to other processes;
providing a perimeter around the space assigned to the automated process that has closures that are susceptible to selective securement;
providing one or more of
activation control measures associated at least with securement of the closures which must be satisfied prior to actuation of the automated process; and
incursion control measures which, in the event that the space assigned to the automated process is subject to an incursion by another process, arrests the automated process until such time as the assigned space has been vacated; and
causing the undertaking to carry out the processes as required to meet the performance demands of the undertaking.

2. A method according to claim 1, further comprising the steps of:
defining a plurality of operating modes for the undertaking;
assigning each of the processes to the modes so as to define an automated mode to which the automated process is assigned and one or more manual modes to which the automated process is not assigned; and
in respect of each mode and in respect of each process assigned thereto, assigning space in the premises that is suitable for carrying out said each respective process.

3. A method according to claim 2,
wherein the space assigned to the automated process in respect of the automated mode is at least partly assigned to other processes assigned to the automated mode; and
the incursion control measures are provided.

4. A method according to claim 2,
wherein the space assigned to the automated process in respect of the automated mode is at least partly assigned to one or more processes assigned to non-automated modes; and
the activation control measures are provided and must be satisfied prior to assumption by the undertaking of the automated mode.

5. A method according to claim 6, wherein:
the undertaking is a coil storage facility;
the premises has a coil storage warehouse and a shipping/receiving area; and
an overhead crane adapted for transporting coils is provided for the warehouse.

6. A method according to claim 5, wherein the modes comprise automatic and manual and the processes assigned thereto comprise
for automatic
automated coil put-away to the warehouse;
automated coil picking from the warehouse;
manual coil receiving to the shipping/receiving area; and
manual coil shipping from the shipping/receiving area
for manual
manual coil put away to the warehouse;
manual coil picking from the warehouse;
manual coil receiving to the shipping/receiving area; and
manual coil shipping from the shipping/receiving area.

7. A method according to claim 6, wherein:
the shipping/receiving area includes a transition area which is traversed by the overhead crane for the warehouse;
the space assigned to manual coil put-away, automated coil put-away, manual coil pickup and automated coil pick-up is defined by the transition area and the warehouse; and
the space assigned to manual coil receiving and manual coil shipping is defined by the shipping/receiving area.

8. A method according to claim 7, wherein the transition area defines at least one transfer zone into which a coil is placed when
transitioning between coil receiving and coil put-away;
transitioning between coil pick-up and coil shipping.

9. A method according to claim 8, wherein the system provides, for each transfer zone, a visual signal perceptible in the shipping/receiving area to denote when the transfer zone has been selected to receive a coil.

10. A method according to claim 8, wherein
each transfer zone has an associated sensor adapted to determine when a coil has been positioned therein;
the incursion control measures provide, when the sensor associated with a transfer zone that has been selected to receive a coil from the warehouse, determines that a coil has been improperly placed in the associated transfer zone, for the arrest of the automated process until such time as the zone has been vacated.

11. A method according to claim 7, wherein the transfer zone is a fixed bunk which is accessible by both the overhead crane for the warehouse and an overhead crane provided for the shipping/receiving area.

12. A method according to claim 11, wherein redundant collision avoidance systems are provided, so as to ensure that the crane for the warehouse and the crane for the shipping/receiving area do not collide.

13. A method according to claim 12, wherein the incursion control measures provide, when
the collision avoidance systems sense that the crane for the shipping/receiving area is within a safety perimeter surrounding the warehouse crane; and
the crane provided for the warehouse is carrying out an automated process,
for movement of the crane provided for the warehouse to be arrested until such time as the shipping/receiving crane vacates the safety perimeter.

14. A method according to claim 6, wherein
the space assigned to the automated process is accessible only by way of closures in respect of which a physical key must be used for locking and unlocking;
the automation system is switchable between the manual and automatic modes only by way of the key; and
the activation control measures are provided and comprise:
sensors associated with the closure to the warehouse that are adapted to sense if the closures are secured;
logic associated with the automation system that prohibits the assumption by the undertaking of the automatic mode unless the closures are secured; and
functionality associated with the switch that necessarily results in deactivation of the automated mode when the key is apart from the switch.

15. A method according to claim 6, wherein repositionable bunks are used for receipt of coils in the warehouse.

16. A method according to claim 15, wherein the modes further comprise a rebunking mode to which is assigned the processes:
bunk repositioning;
manual coil receiving to the shipping/receiving area; and
manual coil shipping from the shipping/receiving area.

17. A method according to claim 8, wherein the space assigned to bunk repositioning is the lower portion of the warehouse.

18. A method according to claim 17, wherein
the automation system is switchable between the manual, automatic and bunking modes only by way of the key; and
the activation control measures comprise:
a requirement that, to access the rebunking mode, the grab of the overhead crane must be free of a load and in the full-up position; and
control language which locks out the hoist in the rebunking mode.
